(19) Europäisches Patentamt

European Patent Office

Office européen des brevets

(11) **EP 0 748 737 B1**

(12) **EUROPÄISCHE PATENTSCHRIFT**

(45) Veröffentlichungstag und Bekanntmachung des Hinweises auf die Patenterteilung:
**23.08.2000 Patentblatt 2000/34**

(51) Int Cl.⁷: **B64G 1/36**, B64G 1/32, G05D 1/08

(21) Anmeldenummer: **96108327.6**

(22) Anmeldetag: **24.05.1996**

(54) **Dreiachsenstabilisierter, erdorientierter Satellit und zugehöriges Sonnen- und Erdakquisitionsverfahren**

Three-axis-stabilized earth satellite and corresponding sun and earth acquisition manoeuvers

Satellite géostationnaire stabilisé en trois axes et des manoeuvres correspondants d'acquisition du soleil et de la terre

(84) Benannte Vertragsstaaten:
**DE FR GB IT**

(30) Priorität: **24.05.1995 DE 19518617**

(43) Veröffentlichungstag der Anmeldung:
**18.12.1996 Patentblatt 1996/51**

(73) Patentinhaber: **DaimlerChrysler AG**
**70567 Stuttgart (DE)**

(72) Erfinder:
• **Fischer, Horst-Dieter, Dipl.-Ing.**
**82008 Unterhaching (DE)**
• **Wullstein, Petra, Dipl.-Ing.**
**85579 Neubiberg (DE)**
• **Chemnitz, Joachim, Dipl.-Ing.**
**81739 München (DE)**

(56) Entgegenhaltungen:
EP-A- 0 363 243          FR-A- 2 659 061
US-A- 3 899 928

**Beschreibung**

Die Erfindung bezieht sich auf einen dreiachsenstabilisierten, erdorientierten Satelliten gemäß dem Oberbegriff des Patentanspruchs 1 sowie auf ein Verfahren zur Durchführung der Sonnen- und Erdakquisition bei einem solchen Satelliten.

Aus der EP 0 363 243 B1 ist ein System zur Positionshaltung eines Satelliten auf einem geostationären Orbit sowie ein Verfahren zur Durchführung des Positionshaltung bekannt. Dabei werden aus einer Richtungsvektormessung Bahnparameter ermittelt, die für die Positionshaltung verwendet werden. Der Satellit wird dabei physikalisch als Punktkörper betrachtet. Das Positionshaltungsverfahren wird in einem System durchgeführt, das wenigstens einen Erdsensor, eine Vielzahl von Solarsensoren, einen in der Süd-Nord-Achse des Satelliten nach Norden gerichteten Sternsensor und ein Element zur Berechnung von Orbitalparametern aufweist.

Ein Satellit zur Durchführung der Sonnen- und Erdakquisition ist aus H. Bittner et al. "The Attitude Determination and Control Subsystem of the Intelsat V Spacecraft", veröffentlicht in Proceedings of AOCS Conference, Noordwijk 3. - 6. Oktober 1977, ESA SP-128, November 1977, bekannt. Er vermag mit Hilfe seines Lageregelungssystems die unterschiedlichsten Manöver durchzuführen, die in der Transferbahn und der geostationären Bahn erforderlich sind, wie z.B. die Sonnenakquisition, d.h. die Ausrichtung der x-Achse seines satellitenfesten Koordinatensystems (x, y, z) auf die Sonne, die Erdakquisition, d.h. die Ausrichtung der z-Achse auf den Erdmittelpunkt, das Apogäumsmanöver, d.h. die Ausrichtung der z-Achse in Richtung der geostationären Bahn im Apogäum der Transferbahn vor dem Apogäumseinschuß, und schließlich alle einfachen Lageregelungsmanöver zur ständigen Einhaltung der Sollorientierung sowie sämtliche Reakquisitionsmanöver bei Verlust der Lagereferenzen wie Sonne und/oder Erde.

Das Lageregelungssystem dieses bekannten Satelliten enthält einen Regler zur Anwendung der jeweils geforderten Regelgesetze, Stellglieder, nämlich Lageregelungsdüsen, zur Erzeugung von Stellmomenten um jede der drei Satelliten-Hauptachsen (x, y, z) nach Maßgabe der vom Regler abgegebenen Stellsignale, sowie Sonnensensoren, einen Erdsensor und ein redundant ausgelegtes, drei-achsig messendes Kreiselpaket zur direkten Messung der Komponenten des Satelliten-Drehgeschwindigkeitsvektors bezüglich der Satelliten-Hauptachsen. Die Sonnensensoren haben ein erstes Gesichtsfeld, welches um die negative z-Achse herum insgesamt die eine Hälfte der xz-Ebene und eine gewisse Breite senkrecht dazu umfaßt, und ein zweites Gesichtsfeld, das um die x-Achse herum insgesamt ein Drittel der xy-Ebene und eine gewisse Breite senkrecht dazu umfaßt. Der Erdsensor ist mit seiner optischen Achse wie üblich in Richtung der z-Achse orientiert, die auf einer erdorientierten Bahn ständig auf den Erd-mittelpunkt auszurichten ist.

Zu den im Lageregelungssystem verwendeten Meßwertgebern gehört als wesentliches Element ein dreiachsig messendes Kreiselpaket zur direkten messenden Verfolgung der auf das satellitenfeste Koordinatensystem bezogenen Komponenten des Satelliten-Drehgeschwindigkeitsvektors $\underline{\omega} \equiv (\omega_x, \omega_y, \omega_z)^T$. Diese Meßwerte werden bei dem bekannten Satelliten benötigt, weil die Regelung dort entsprechend ausgelegt ist, um die gewünschten Lageregelungsmanöver durchführen zu können. Die Verwendung derartiger Kreisel hat jedoch den gravierenden Nachteil, daß es sich dabei um elektromechanische Komponenten handelt, an die insbesondere unter den extremen Bedingungen des Weltraums sehr hohe Anforderungen zu stellen sind, und die sehr stör- und verschleißanfällig sind. Die dadurch erforderliche redundante Auslegung stellt einen erheblichen Kostenfaktor dar. Auf erdnahen Bahnen ist zudem die Verwendung von Sonnensensoren durch die relativ langen Eclipse-Zeiten (Zeitdauer der Sonne im Erdschatten) eingeschränkt.

Der Erfindung liegt daher die Aufgabe zugrunde, einen Satelliten der eingangs genannten Art bereitzustellen, dessen Lageregelungssystem möglichst kostengünstig, dabei aber funktionssicher gestaltet ist.

Diese Aufgabe ist gemäß der Erfindung durch die im kennzeichnenden Teil des Patentanspruchs 1 enthaltenen Merkmale gelöst.

Demnach wird nunmehr ein 3-achsiges Magnetometer und, falls benötigt, eine Sonnensensoranordnung verwendet, deren Gesichtsfeld in beiden Richtungen senkrecht zur optischen Achse größer als 60° sein sollte, und die nur ein einachsiges Meßsignal zu liefern braucht, das zu null wird, wenn die Sonne in der Sollebene liegt. Das Ausregeln der auf dieser Ebene senkrecht stehenden Sonnenvektorkomponente erfolgt mit dem im Patent DE 3922761 C2 beschriebenen Verfahren, wobei hier die Geschwindigkeitsinformation aus dem Magnetometer gewonnen wird.

Als wesentliches Merkmal ist nämlich gefordert, daß als Meßwertgeber für das Lageregelungssystem das Magnetometer, die Sonnensensoranordnung und der Erdsensor vorhanden sind, also keine Kreisel mehr benötigt werden. Hierzu sind im Regler besondere Regelgesetze anzuwenden, die keine direkten Meßwerte für die Komponenten des Satelliten-Drehgeschwindigkeitsvektors $\underline{\omega}$ benötigen, und die zur Bereitstellung der Stellsignale nur die beschriebenen Meßwertgeber erfordern.

In den Unteransprüchen sind Verfahren zur Durchführung der Sonnen- und Erdakquisition angegeben, die den oben gestellten Anforderungen genügen und bei einem Satelliten gemäß der Erfindung, der über keine Kreisel verfügt, zur Anwendung kommen können.

Die Sonnenakquisition ist ein Manöver, mit dem bekanntlich beabsichtigt ist, eine der Satelliten-Hauptachsen, z.B. die x-Achse, auf die Sonne auszurichten. Dann können die in Richtung der y-Achse ausfahrbaren und um diese drehbaren Solargeneratoren zumindest teilentfaltet und der Sonne zugekehrt werden, um so die Energieversorgung, beispielsweise in der Transferbahn, bereits in einem gewissen Mindestumfang sicherzustellen. Das Manöver der Erdakquisition bezweckt, eine andere der drei Satelliten-Hauptachsen, z.B. die z-Achse, auf den Erdmittelpunkt zu richten, da die der Kommunikation mit der oder den Erdstationen dienenden Antennen auf dem Satelliten in diese Richtung orientiert sind. Dieses Manöver ist im allgemeinen bereits auf der Transferbahn durchzuführen, aber auch auf der endgültigen geostationären Bahn nach Durchführung des Apogäumsmanövers.

Als wesentliche Information für die Sonnen- und Erdakquisition wird eine Schätzung für den Drehgeschwindigkeitsvektor $\omega$ benötigt, die wie folgt gewonnen wird:

Die inertiale Drehgeschwindigkeit $\omega$ des Raumfahrzeugs genügt der Eulergleichung:

$$J_s \dot{\omega} + \widetilde{\omega}(J_s \omega + h_w) = t_c \qquad (1)$$

$J_s$: Trägheitstensor des Satelliten

$t_c$: Stellmomentenvektor

$h_w$: Drallradvektor, falls vorhanden

$$\widetilde{\omega} = \begin{pmatrix} 0 & -\omega_z & \omega_y \\ \omega_z & 0 & -\omega_x \\ -\omega_y & \omega_x & 0 \end{pmatrix} \qquad : \text{Kreuzproduktmatrix}$$

Mit dem Ansatz

$$\omega = (I - S_B S_B^T)\,\omega + S_B S_B^T \omega$$
$$= \omega_q + S_B \cdot c \qquad (2)$$

$\omega_q$: Komponente von $\omega$ quer zum Richtungsvektor ($S_B$)

$S_B$: Einheitsvektor in Magnetfeldrichtung in Satellitenkoordinaten

c: positiver oder negativer Wert der Komponente von $\omega$ parallel zum Richtungsvektor

folgt aus (1)

$$\dot{\omega}_q + \dot{S}_B c + \dot{c} S_B = J_s^{-1} t_c + d_0 - d_1 c - d_2 c^2 \qquad (3)$$

mit

$$\text{(a)} \quad d_0 = J_s^{-1} \tilde{\omega}_q (J_s \omega_q + h_w)$$

$$\text{(b)} \quad d_1 = J_s^{-1} [\tilde{\omega}_q J_s S_B + \tilde{S}_B (J_s \omega_q + h_w)] \tag{4}$$

$$\text{(c)} \quad d_2 = J_s^{-1} \tilde{S}_B J_S S_B$$

Durch Multiplikation von Gleichung (3) mit $S_B$ (zur Elimination von c) von links geht diese über in

$$(\tilde{S}_B \dot{S}_B + \tilde{S}_B d_1) c + \tilde{S}_B d_1 c_2 = \tilde{S}_B \left( J_S^{-1} t_c - d_0 - \dot{\omega}_q \right) \equiv \tilde{S}_B r \tag{5}$$

Aus der Beziehung

$$\text{(a)} \quad \dot{S}_B = \tilde{S}_B \omega + T^{BI} \dot{S}_I \tag{6}$$

$$\text{(b)} \quad -\tilde{S}_B \dot{S}_B = (I - S_B S_B^T) \omega - \tilde{S}_B T^{BI} \dot{S}_I = \omega_q + \delta$$

$S_I$: Einheitsvektor in Magnetfeldrichtung im Inertialsystem

$\delta$: Geschwindigkeitsfehler, der für Akquisitionsmanöver tolerierbar ist

$T^{BI}$: Transformationsmatrix vom Satelliten ("body")- zum Inertialsystem

läßt sich nach näherungsweiser Differentiation von $S_B$, z.B. gemäß

$$\text{(a)} \quad \dot{x} = \frac{1}{T_F} (S_B - x) \mid \text{Filterungvon } S_B$$

$$\text{(b)} \quad \dot{S}_B = \frac{1}{T_F} (S_B - x) \tag{7}$$

sofort eine Näherung $\hat{\omega}_q$ für den 1. Anteil der gesuchten Geschwindigkeit nach (2) angeben.

$$\hat{\omega}_q = -\tilde{S}_B \dot{S}_B \tag{8}$$

Nach einer weiteren näherungsweisen Differentiation von $\hat{\omega}_q$ analog zu (7) sind in (5) alle Größen außer c bekannt, womit hierfür eine vektorielle, nichtlineare (quadratische) Bestimmungsgleichung vorliegt, nach deren Lösung zusammen mit (8) eine Näherung für $\omega$ gemäß (2) vorliegt.

Zur Lösung von (5) hat sich ein iteratives Verfahren in Anlehnung an den sogenannten Gauß-Levenberg-Marquardt-Algorithmus als am numerisch zuverlässigsten erwiesen, das wie folgt realisiert wird:

- Definition der von $\hat{c}$ (Näherung für c) abhängigen Vektorfunktion

$$f(\hat{c}) := (-\hat{\omega}_q + \widetilde{S}_B d_1)\hat{c} + \widetilde{S}_B\ d_2\ \hat{c}^2 - \widetilde{S}_B r \qquad (9)$$

mit zugehöriger Ableitung

$$d(\hat{c}) = \partial f / d\hat{c} = -\hat{\omega}_q + \widetilde{S}_B d_1 + 2\widetilde{S}_B d_2\ \hat{c} \qquad (10)$$

- ausgehend von einem Anfangswert $c_0$ (i.a. gleich null) wird eine verbesserte Schätzung berechnet gemäß

$$(a) \qquad C_{K+1} = c_K - \Delta c_K$$

$$(b) \qquad \Delta c_K = \frac{d^T (c_K)\ f(c_K)}{\lambda_K + d^T(c_K)d(c_K)} \qquad (11)$$

wobei der Parameter $\lambda_K$ ausgehend von einem Anfangswert (typisch: $\lambda_0 = 10^{-2}$) adaptiert wird gemäß

$$(a) \qquad \lambda_{K+1} = \lambda_K, \text{ falls } (1 + \varepsilon)f_m > |f_K| > (1 - \varepsilon)f_m,$$

$$f_m \text{ unverändert}$$

$$(b) \qquad \lambda_{K+1} = \lambda_K/l_f, \text{ falls } |f_K| \le (1 - \varepsilon)\ f_m,$$

$$f_m = |f_k|$$

$$(c) \qquad \lambda_{K+1} = \lambda_K \cdot l_f, \text{ falls } |f_K| \ge (1 + \varepsilon)\ f_m,$$

$$f_m = |f_K| \qquad (12)$$

mit

$$(a) \qquad f_{m0} = 0$$

$$(b) \qquad \varepsilon = 0.02 \div 0.05$$

$$(c) \qquad |f_K| = \sqrt{f^T (c_K)f(c_K)}$$

$$(d) \qquad l_f = 2 \div 5 \qquad (13)$$

Nach Berechnung von $\hat{\omega}_q$ und $\hat{c} \cong c_{K+1}$ wird in bekannter Weise durch

- 1 Suchrotation senkrecht zur optischen Achse des Sonnensensors, falls das Gesichtsfeld des Sensors $\pm$ 90° beträgt (Überdeckung des Halbraumes in dem die optische Achse liegt)

- 2 aufeinander und zur optischen Achse senkrechte Suchrotationen, falls das Gesichtsfeld nicht den ganzen Halbraum erfaßt

die Sonne in das Gesichtsfeld des Sonnensensors gebracht, wofür das folgende Regelgesetz verwendet wird:

$$u_D = -K_{D1}\ (\hat{\omega}_q - \omega_{bq}) - K_{D2}\ (\hat{c} - c_b)\ S_B \qquad (14)$$

mit

$$\omega_{bq} = (I - S_B\, S_B{}^T)\omega_b$$

$$c_b = S_B\, S_B{}^T\, \omega_b$$

$u_b$: Geschwindigkeitsaufschaltung

$\omega_b$: gewünschter Geschwindigkeitssollwert

$K_{D1}$: Diagonalmatrix der Aufschaltwerte für die Quergeschwindigkeit

$K_{D2}$: Aufschaltwert für Geschwindigkeit um $S_B$

Zum Einregeln der Sonnenrichtung in die optische Achse kann z.B. das in Patent DE 3922761 C 2 beschriebene Regelgesetz benutzt werden, was insgesamt auf die Aufschaltung führt

$$u = u_D + K_p\, [\tilde{o} - I]\, e_M\, L\{N_{sy}\} \qquad (15)$$

mit

o: Einheitsvektor der optischen Achse des Sonnensensors

$e_M$: Einheitsvektor der Meßrichtung des Sonnensensors

I: Einheitsmatrix

$K_p$: Diagonalmatrix der Lageaufschaltwerte

$N_{sy}$: Sonnensensormeßsignal

L: Begrenzer

$\omega_b \cong d \cdot o$ im Anteil $u_D$

d: Drehrate um die optische Achse

Die Erdakquisition wird durch Einregeln der Magnetfeldrichtung auf eine Referenzrichtung $s_R$ erreicht, die so gewählt ist, daß bei einer Drehung um $s_R$ die optische Achse des Erdsensors die Erde überstreicht. Das zugehörige Regelgesetz lautet

$$u = u_D + K_p\, L\, \{\tilde{S}_R\ S_B\} \qquad (16)$$

$\omega_b = d \cdot s_R$ im Anteil $u_D$

Nach Erscheinen der Erde im Gesichtsfeld des Erdsensors läßt sich aus den Erdsensor- und Magnetometersignalen eine 3-Achsenreferenz ableiten und in bekannter Weise zur Aufrechterhaltung der Erdorientierung verwenden.

Abschließend sei darauf hingewiesen, daß sämtliche oben gemachten Ausführungen richtig bleiben, wenn statt des Magnetometers eine andere Richtungsvektormessung, z.B. aus einem Stemsensor, verwendet wird.

Im Vorhergehenden bedeutet allgemein:

EP 0 748 737 B1

**Indizes:**

s = Satellit
B = Satellitenkörper ("Body")
q = quer (-Komponente)
I = inertial
R = Referenz

**Funktionssymbole:**

| | | |
|---|---|---|
| "." ... | = | Ableitung nach der Zeit |
| "~" ... | = | Kreuzproduktmatrix, analog zu $\tilde{\omega}$ |
| "T" ... | = | transponierte Matrix |
| "−1" ... | = | inverse Matrix |
| "∧" ... | = | Schätzwert |

**Patentansprüche**

1. Dreiachsenstabilisierter erdorientierter Satellit mit einem Lageregelungssystem zur Sonnen- und Erdakquisition, welches einen Regler, Stellglieder zur Erzeugung von Regelmomenten um jede der drei Achsen eines satellitenfesten Koordinatensystems (Hauptachsen x, y, z), eine Richtungsvektormessung und eine Sonnensensoranordnung enthält, **dadurch gekennzeichnet**, daß das Lageregelungssystem als Meßwertgeber ein Magnetometer zur Richtungsvektormessung, die Sonnensensoranordnung und einen Erdsensor aufweist, wobei das Lageregelungssystem zur Sonnen- und Erdakquisition geeignet ist,

   a) eine Schätzung für die Drehgeschwindigkeit des Satelliten aus der Richtungsvektormessung,

   (b) eine Sonnensuche abhängig von der Gesichtsfeldgröße des Sensors durch eine oder zwei Suchrotationen quer zur optischen Achse,

   (c) ein Einregeln der Sonnenrichtung auf die optische Achse,

   (d) ein Einregeln der Richtungsvektormesssung auf eine Referenzrichtung $S_R$, die so gewählt ist, daß bei Drehung um $S_R$ die optische Achse des Erdsensors die Erde überstreicht,

   vorzunehmen.

**Claims**

1. A three-axis-stabilised, earth-orientated satellite with a position control system for sun and earth acquisition, comprising a controller, actuators for generating control moments about each of the three axes of a satellite-fixed coordinate system (main axes x, y, z), a direction-vector measuring device and a solar sensor arrangement, characterised in that the position control system, as transmitter, comprises a magnetometer for direction-vector measurement, the solar sensor arrangement and an earth sensor, the position control system for sun and earth acquisition being suitable for carrying out:

(a) estimation of the rotational speed of the satellite from the direction-vector measurement;

(b) a solar search as a function of the size of the field of view of the sensor by one or two search rotations transverse to the optical axis;

(c) adjustment of the direction of the sun to the optical axis;

(d) adjustment of the direction-vector measurement to a reference direction $S_R$, which is selected so that, on rotation about $S_R$, the optical axis of the earth sensor sweeps over the earth.

**Revendications**

1. Satellite géostationnaire stabilisé sur trois axes comportant un système de régulation de position pour l'acquisition solaire et terrestre, comportant un régulateur, un actionneur pour créer des couples de régulation autour de chacun des trois axes d'un système de coordonnées solidaire du satellite (axes principaux x, y, z), une mesure de vecteur de direction et un montage de capteur solaire,
caractérisé en ce que
le système de régulation de position utilise comme capteur de valeurs de mesure un magnétomètre pour mesurer le vecteur directionnel, le dispoositif des capteurs solaires et un capteur terrestre,
selon lequel le système de régulation de position pour l'acquisition solaire et terrestre,

a) effectue une évaluation de vitesse de rotation du satellite par une mesure de vecteur de direction,
b) fait une recherche du soleil selon la grandeur du champ de vue du capteur par une ou deux rotations de recherche transversales à l'axe optique,
c) régule la direction du soleil sur l'axe optique,
d) régule la mesure du vecteur directionnel sur une direction de référence $S_R$ choisie pour que lors d'une rotation autour de $S_R$, l'axe optique du capteur terrestre balaie la terre.